(19) Europäisches Patentamt
European Patent Office
Office européen des brevets

(11) **EP 4 474 268 A1**

(12) **EUROPEAN PATENT APPLICATION**
published in accordance with Art. 153(4) EPC

(43) Date of publication:
**11.12.2024 Bulletin 2024/50**

(21) Application number: 23749707.8

(22) Date of filing: **30.01.2023**

(51) International Patent Classification (IPC):
*B64C 1/00* (2006.01)          *B29C 70/06* (2006.01)
*B29C 70/42* (2006.01)          *B29C 70/68* (2006.01)
*B64C 11/22* (2006.01)          *F03D 1/06* (2006.01)

(52) Cooperative Patent Classification (CPC):
**B29C 70/06; B29C 70/42; B29C 70/68; B64C 1/00;
B64C 11/22; F03D 1/06**

(86) International application number:
**PCT/JP2023/002834**

(87) International publication number:
**WO 2023/149391 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.02.2022 JP 2022015526**

(71) Applicant: **Toray Industries, Inc.**
**Tokyo 103-8666 (JP)**

(72) Inventors:
• **MITSUTSUJI, Yuki**
**Nagoya-shi, Aichi 455-8502 (JP)**
• **HASEGAWA, Wataru**
**Nagoya-shi, Aichi 455-8502 (JP)**
• **HIRANO, Noriyuki**
**Nagoya-shi, Aichi 455-8502 (JP)**

(74) Representative: **Kador & Partner Part mbB**
**Corneliusstraße 15**
**80469 München (DE)**

(54) **ROTARY WING**

(57)    An object of the present invention is to provide a rotor blade which is excellent in lightweight, stiffness, fatigue characteristics, and dimensional accuracy, and especially excellent in fatigue characteristics, that is, durability, and a main object of the present invention is to provide a rotor blade including at least: a component [A] described below constituting a skin which is a surface layer of the rotor blade; and a component [B] described below constituting a core which is an interior of the skin, wherein the component [B] is enclosed in the component [A] at least in a cross-section taken at the center of the distance between a central axis at the time of rotation and a tip of the rotor blade:

Component [A]: a continuous fiber base material including continuous reinforcing fibers and a matrix resin;
Component [B]: a porous body including reinforcing fibers and a resin, the reinforcing fiber having a mass mean fiber length of 1 mm or more and 15 mm or less and forming voids by bonding through the resin.

Fig. 1

EP 4 474 268 A1

**Description**

Technical Field

The present invention relates to a rotor blade that can be suitably used for rotor blade aircraft, propeller-driven fixed wing aircraft, wind turbines, and the like, and more particularly, to a rotor blade having a skin including a continuous fiber base material, and a specific core.

Background Art

In a means of air transportation such as aircraft, weight reduction is an important issue as it directly affects the flight range. For weight reduction of aircraft, rotor blades (also referred to as blades), used as driving sources to drive the flight, require, in addition to weight reduction, high dimensional accuracy for forming complicated shapes of the blades with high accuracy as well as durability as they rotate high speed.

Patent Literature 1 exemplifies a rotor blade having a skin including carbon fibers impregnated with a thermosetting resin and a core part including a foam. It proposes a rotor blade utilizing a melamine resin foam as a core and a base material including a biaxial or multi-axial carbon fiber fabric impregnated with a thermosetting resin as a skin to suppress mass variation.

Patent Literature 2 exemplifies a method of producing a composite blade including overlaying reinforcing fiber base materials (so-called prepreg) in which reinforcing fibers are impregnated with a resin, placing a foaming agent in an internal space formed, and heating and expanding the foaming agent. It proposes to control the curing temperature and the foaming temperature to obtain a composite blade having high dimensional accuracy and high quality.

Citation List

Patent Literature

    Patent Literature 1: JP-A 2022-9927
    Patent Literature 2: JP-A 2019-1024

Summary of Invention

Technical Problem

As described above, rotor blades have complicated shapes and are required to be lightweight and have high dimensional stability. Even though the rotor blade utilizing a foam including a resin as a core material can ensure lightweight, dimensional accuracy may be lost during molding or stiffness may be insufficient, resulting in poor fatigue characteristics and usable period shorter than expected as a rotor blade.

In a rotor blade utilizing a foaming agent, even though dimensional accuracy of the outer layer can be obtained during molding, use of an internal reinforcing material may result in difficulty in molding with high positional accuracy and inability of balance adjustment. Furthermore, since the core material of the consequently produced rotor blade is a resin foam, for example, it lacks stiffness as a rotor blade, resulting in poor fatigue characteristics and a usable period shorter than expected as a rotor blade.

Therefore, an object of the present invention is to provide a rotor blade which is lightweight, has high stiffness and excellent dimensional accuracy, and thus has excellent fatigue characteristics and durability.

Solution to Problem

The rotor blade of the present invention includes at least: a component [A] described below constituting a skin which is a surface layer of the rotor blade; and a component [B] described below constituting a core which is an interior of the skin, wherein the component [B] is enclosed in the component [A] at least in a cross-section taken at the center of the distance between a central axis at the time of rotation and a tip of the rotor blade:

    Component [A]: a continuous fiber base material including continuous reinforcing fibers and a matrix resin;
    Component [B]: a porous body including reinforcing fibers and a resin, the reinforcing fiber having a mass mean fiber length of 1 mm or more and 15 mm or less.

Advantageous Effects of Invention

The rotor blade according to the present invention has a porous body including reinforcing fibers and a resin as a core, and thus is lightweight and has excellent stiffness and dimensional accuracy. Therefore, a rotor blade excellent in fatigue characteristics and durability can be provided.

Brief Description of Drawings

FIG. 1 is a plan view illustrating an example of the rotor blade of the present invention.
FIG. 2 is a plan view illustrating an example of a cross-section of the rotor blade of the present invention.
FIG. 3 is a plan view illustrating an example of a cross section of the rotor blade of the present invention having reinforcing layers.
FIG. 4 is a plan view illustrating an example of a cross-section of the rotor blade of the present invention having an incision.
FIG. 5 is a perspective view from the top illustrating an arrangement of incisions.
FIG. 6 is a plan view illustrating an example of a cross-section of the rotor blade of the present invention, (a) is a cross-section of the rotor blade, and (b) is a section view of a plane which passes through a leading edge and a trailing edge of the rotor blade and is approximately orthogonal to the cross-section.
FIG. 7 is a plan view illustrating an example of a cross-section of the rotor blade of the present invention having a beam part.
FIG. 8 is a plan view illustrating an example of an enlarged cross-section of a bonding part between the beam part and the skin part.
FIG. 9 is a plan view illustrating a cross-section of the rotor blade of the present invention including a core part having a hollow part.
FIG. 10 is a plan view illustrating an example of a cross section of the rotor blade of the present invention having a hollow part and reinforcing layers.
FIG. 11 is a plan view illustrating an example of a cross-section of the rotor blade of the present invention having hollow parts and a beam part.
FIG. 12 is a plan view illustrating an example of a cross-section of the rotor blade of the present invention having hollow parts having various shapes.
FIG. 13 is a schematic view illustrating an example of anchoring parts of the core and the skin of the rotor blade of the present invention.
FIG. 14 is a schematic view illustrating an example of the core part of the present invention.
FIG. 15 is a section view explaining an incision or convexo-concave part provided in the core part, (a) is an example of an incision, (b) is an example of a concave part, and (c) is an example of a convex part.
FIG. 16 is a section view illustrating an example of the rotor blade according to the present invention, in which convexo-concave parts are provided in the component [B].
FIG. 17 is a section view illustrating an example of the rotor blade according to the present invention, in which an incision is provided in the component [B]. Description of Embodiments

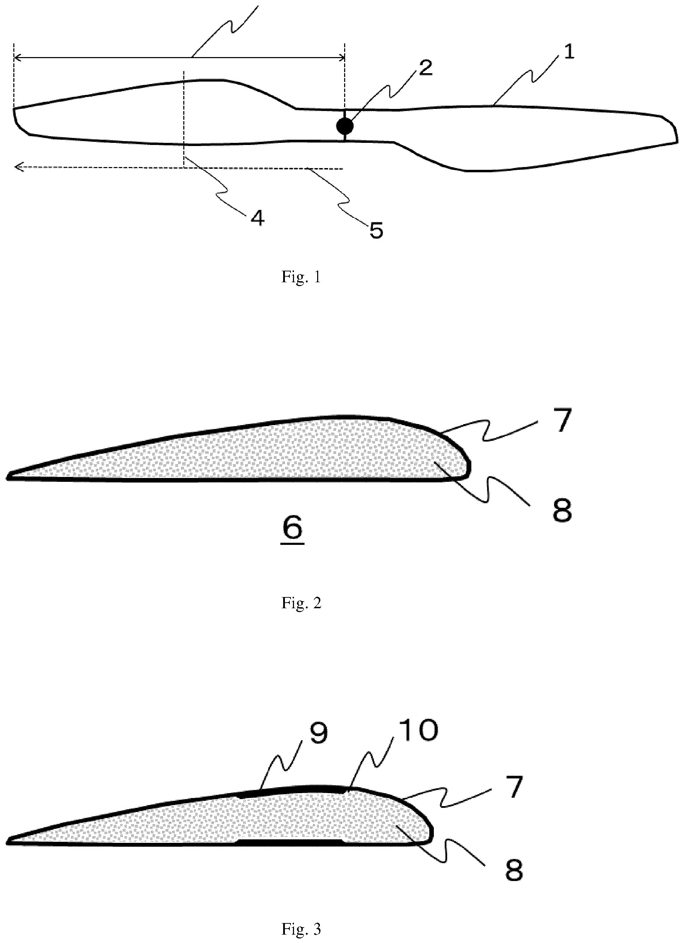

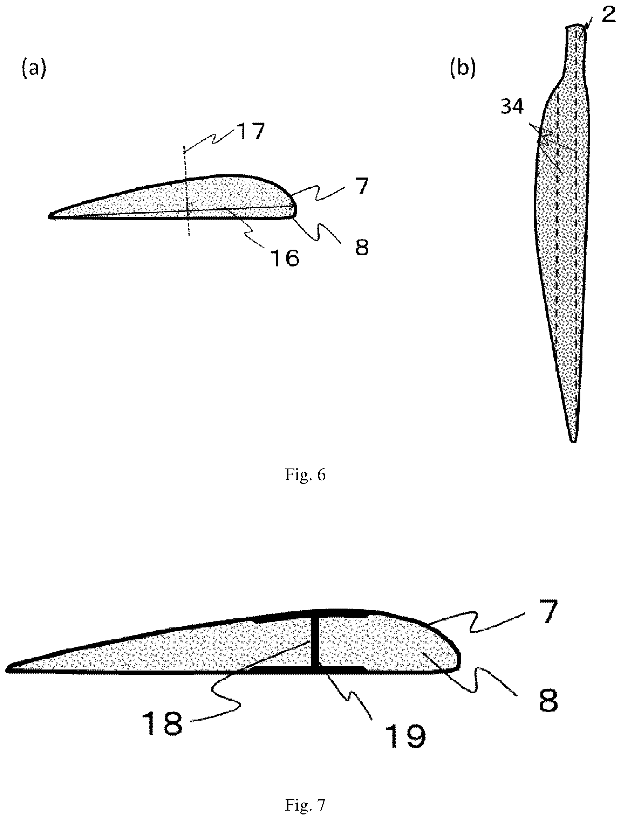

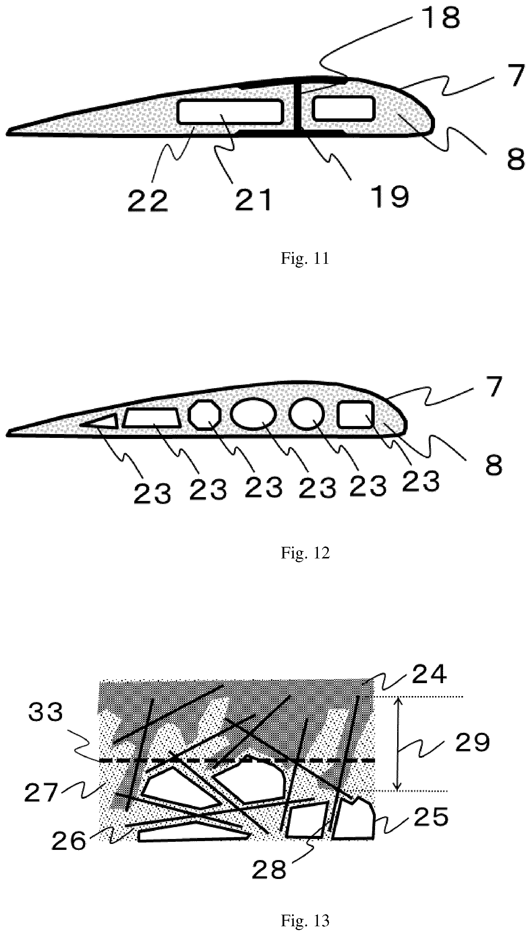

Hereinafter, the rotor blade of the present invention will be described in detail.
The rotor blade of the present invention is a rotor blade including at least: a component [A] described below constituting a skin which is a surface layer of the rotor blade; and a component [B] described below constituting a core which is an interior of the skin, wherein the component [B] is configured to be enclosed in the component [A] at least in a cross-section taken at the center of the distance between a central axis at the time of rotation and a tip of the rotor blade.
In addition, the rotor blade of the present invention has a structure including a skin part constituting a surface layer and a core part covered with the skin part, at least at the midpoint of a line segment connecting the rotation axis and the tip of the blade, when viewed in a section perpendicular to its rotation axis and to a straight line orthogonal to the rotation axis and passing through the tip of each blade, wherein the skin part is constituted by a continuous fiber base material including continuous reinforcing fibers and a matrix resin, and the core part is constituted by a porous body including reinforcing fibers having a mass mean fiber length of 1 mm or more and 15 mm or less and a resin.
Further, in a preferred aspect, the rotor blade of the present invention includes a reinforcing part on a side of the skin part where the core part is provided in order to further reinforce or support the skin part and the core part, as shown in FIG. 3, FIG. 7, and FIG. 11, and the reinforcing part is preferably constituted by a continuous fiber base material including continuous reinforcing fibers and a matrix resin. Furthermore, in the rotor blade of the present invention, a member connecting the skin parts may be placed as indicated by reference sign 18 in FIG. 7, and the member is preferably constituted by a continuous fiber base material including continuous reinforcing fibers and a matrix resin. In order to adjust the center-of-gravity balance of the entire rotor blade, hollow parts may be formed in the core part, as shown in FIG. 11 and FIG. 12.

That is, in the rotor blade of the present invention, the "component A" refers to a member constituting the skin part, composed of a continuous fiber base material which includes continuous reinforcing fibers and a matrix resin; the "component B" refers to a member constituting the core part, which includes a porous body including reinforcing fibers having a mass mean fiber length of 1 mm or more and 15 mm or less and a resin; the "component C" refers to a member constituting the reinforcing part, which includes a continuous fiber base material including continuous reinforcing fibers and a matrix resin; and the "component D" refers to a member (conveniently referred to as a "beam part") penetrating the core part and connecting the skin parts, which includes a continuous fiber base material including continuous reinforcing fibers and a matrix resin. The rotor blade of the present invention will be hereinafter explained while individually explaining the skin part, the core part, the reinforcing part, and the beam part.

FIG. 1 is a plan view illustrating an example of a rotor blade. Ordinarily, 2 to 6 rotor blades are bonded to constitute a so-called propeller. FIG. 1 shows a propeller including 2 rotor blades bonded together. In the present invention, unless otherwise specified, one of the rotor blades, i.e., one half of the rotor blade in the plane view shown in FIG. 1 is referred to as a rotor blade. Unless otherwise specified, the explanation will be given for cross-sections taken at a central axis (also referred to as a rotation axis) at the time of rotation and at the center of the distance between the central axis and the tip of the rotor blade, i.e., the midpoint between the central axis and the tip of the rotor blade.

The rotor blades are rotated around the central axis indicated by reference sign 2 in FIG. 1, which gives acceleration to air to obtain thrust. The central axis used herein means the central axis of rotation. The distance between the central axis and the tip of the rotor blade is indicated by reference sign 3 in FIG. 1. The tip of the rotor blade is the most distant position from the central axis, when a straight line is drawn from the central axis to the tip. Unless otherwise defined, the starting point of the central axis is the center of the thickness of a mounting part which is a base of the rotor blade.

Next, FIG. 2 shows an example of a cross-section taken at the center of the distance between the central axis and the tip of the rotor blade, in the distance between the central axis and the tip of the rotor blade described above. The cross-section used herein means a section orthogonal to a straight line connecting the central axis and the tip of the rotor blade explained above.

The rotor blade of the present invention includes, in a cross-section at the center of the distance between a central axis at the time of rotation and a tip of the rotor blade, a component [A] constituting a skin, and a component [B] constituting a core which is an interior of the skin, wherein the component [B] is enclosed in the component [A]. Being enclosed used herein means that the component [B] is not exposed on the surface of the rotor blade, i.e., all of the portions corresponding to the outer surface of the rotor blade are constituted by the component [A] in the cross-section. The component [B] is a porous body. Therefore, when it is exposed and includes water such as rain at the time of usage, it may fail to ensure lightweight for a rotor blade.

In general, the rotor blade has cross-section continuously varying in shape from the base part to the tip of the rotor blade in order to obtain efficient thrust. Therefore, as mentioned above, at least in a cross-section taken at the center of the distance between a central axis at the time of rotation and a tip of the rotor blade, the rotor blade includes a component [A] constituting a skin and a component [B] constituting a core which is an interior of the skin, and is constituted so that the component [B] is enclosed in the component [A]. However, the tip of the rotor blade may have no core part. Throughout the entire area in the longitudinal direction of the rotor blade, in the cross-section, the rotor blade may include a component [A] constituting a skin and a component [B] constituting a core which is an interior of the skin, and may be constituted so that the component [B] is enclosed in the component [A].

The portion of the component [B] enclosed in the component [A] preferably constitutes a portion with a length corresponding to 50% or more, more preferably 70% or more, and still more preferably 80% or more, with respect to the length from the central axis to the tip of the rotor blade being 100%.

When the constitution of FIG. 2 in which the component [B] is enclosed in the component [A] is constituted so that its length corresponds to 50% or more with respect to the length from the central axis to the tip of the rotor blade being 100%, a rotor blade having lightweight and high dimensional accuracy can be obtained, which is preferable.

The rotor blade is usually attached to a mounting part of the central axis, called a hub, and the mounting part is often bonded with a metal bolt or the like. Therefore, the base part of the rotor blade does not necessarily need to have a skin-core structure, and may include a fiber-reinforced composite material that does not have a porous structure, or may be molded integrally with a metal member for bonding to the central axis.

Furthermore, the rotor blade of the present invention may include a reinforcing part on a side of the skin part where the core part is provided in order to further reinforce or support the skin part and the core part, and the reinforcing part is preferably constituted by a continuous fiber base material including continuous reinforcing fibers and a matrix resin. The reinforcing part is placed at a portion with a length corresponding to 50% or more with respect to the length from the central axis to the tip of the rotor blade being 100%, and the component [B] is preferably anchored along a step part of different thickness.

The reinforcing part can improve the stiffness of the rotor blade. Therefore, it is preferable that the reinforcing part be placed on the rotor blade. For the purpose of improving the stiffness for the rotor blade, the reinforcing part is placed at a portion with a length corresponding to, preferably 50% or more, more preferably 60% or more, still more preferably 80% or more, with respect to the length in the longitudinal direction of the rotor blade, indicated by reference sign 5 in FIG. 1, being 100%. Since the reinforcing part is placed over 50% or more in the longitudinal direction, the rotor blade having high stiffness and high durability can be obtained, which is preferable.

An example of the thickness of the component [C] is Ts × 0.1 to Ts × 5, where Ts is the thickness of the skin. The thickness can be selected based on the balance between lightweight and stiffness, and is preferably Ts × 0.2 to Ts × 3, more preferably Ts × 0.3 to Ts × 2.

Further, reinforcing fibers included in the component [C] are preferably continuous reinforcing fibers from the viewpoint of improving stiffness in the longitudinal direction. More preferably, the continuous reinforcing fibers are laminated in 0° direction with respect to the longitudinal direction being 0°.

As indicated by reference sign 10 in FIG. 3, when the component [C] is placed, a step part is formed at the portion bonded to the component [A]. It is preferable that the step part formed by bonding the component [C] to the component [A] have a continuously varying thickness. Furthermore, the component [B] is preferably anchored along the step part.

As mentioned below, since the component [B] includes reinforcing fibers, it is a porous body having lightweight and high stiffness. Therefore, it can support the component [C] with high accuracy during molding, and a rotor blade can be produced with extremely high dimensional accuracy. Further, by anchoring to the component [B] including the step part, the reinforcing layer can be strongly supported during continuous usage, providing dramatically high fatigue characteristics. Anchoring used herein means a state where the reinforcing fibers in the component [B] penetrate into the component [A] by 5 μm or more, as mentioned below.

Furthermore, as for the rotor blade of the present invention, the component [B] has an incision or a convexo-concave part having a depth of 0.1 mm or more in a portion with a length corresponding to 50% or more, more preferably 70% or more, still more preferably 80% or more, of the length from the central axis to the tip of the rotor blade being 100%, in a portion other than those corresponding to 5 mm from the leading edge and 5 mm from the trailing edge of the rotor blade, and the component [A] preferably enters the incision or the convexo-concave part.

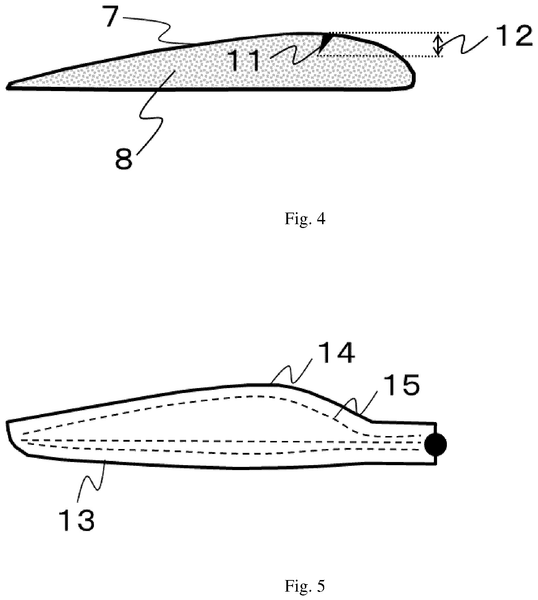

FIG. 4 shows an example of the rotor blade having an incision provided in the component [B]. The incision indicated by reference sign 12 in FIG. 4 more preferably has a depth of 0.5 mm or more and 2 mm or less. Alternatively, the height or depth of the convexo-concave part is preferably 0.05 mm or more. When the depth of the incision is more than 2 mm, or the depth of the concave part or the height of the convex part is more than 2 mm, the flexural modulus of the porous body may deteriorate. Further, the component [A] preferably enters the incision or the convexo-concave part. Accordingly, since there is an incision preferably having a depth of 0.5 mm or more or a convexo-concave part preferably having a depth of 0.05 mm or more and the component [A] enters the incision or the convexo-concave part, adhesiveness between the component [B] and the component [A] is more ensured, and durability when the rotor blade is used can be dramatically improved. When the depth of the incision is 0.5 mm and the depth of the convexo-concave part is 0.05 mm or less, adhesiveness of the component [A] is reduced. When the depth of the incision is 2 mm or more or the depth of the convexo-concave part is 0.5 mm or more, an amount of entrance of the component [A] is insufficient, and a resin rich portion or a void is produced, which may result in degraded mechanical properties.

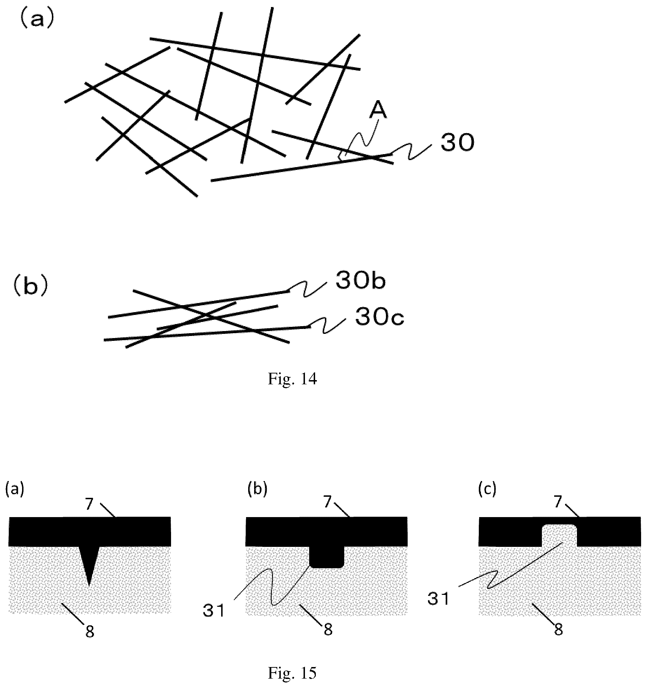

More preferable example of the incision in the present invention has a structure which gradually decreases in width from the surface toward the depth direction, as shown in FIG. 15(a), from the viewpoint of adhesiveness between the component [A] and the component [B]. However, from the viewpoint of flowability of the component [A] or durability of the component [B], the convexo-concave parts as shown in FIG. 15(b), FIG. 15(c) are more easily entered by the component [A] and less likely to form a resin rich portion or a stress concentration part. In view of flowability/stiffness of the component [A] and the component [B], the incision or the convexo-concave part can be selectively formed. In this case, the incision or the convexo-concave parts may be arranged in a straight line along the longitudinal direction, or arranged in a curved line along either shape of the leading edge or trailing edge. However, the incision or the convexo-concave parts arranged in a curved line along the shape can more ensure adhesiveness, which is preferable.

FIG. 5 shows an example of the incision arranged in the longitudinal direction. Since the incision does not necessarily need to be provided in a straight line, the length of the incision as an actual length of the incision may be more than 100% of the length from the central axis of the rotor blade to the tip of the rotor blade being 100%. Further, there may be one, or more than incisions. From the viewpoint of adhesive property, it is preferable that one or more incisions be provided. However, since too many incisions lead to reduced flexural modulus of the porous body, the total volume of the incision is 5 vol% or less of the entire volume of the rotor blade.

On the other hand, when a convexo-concave part is provided, the component [A] enters and anchors in the concave part or between the convex parts of the component [B] as shown in FIG. 15(b) or FIG. 15(c), thereby more ensuring adhesiveness between the component [B] and the component [A], and dramatically improving durability during usage of the rotor blade.

The shape of the convexo-concave part is not particularly limited, but preferably has a continuously curved surface such as a dimple. A sharp change in curvature or presence of corners like in a rectangle lead to reduction in fatigue characteristics due to a resin rich portion or stress concentration.

Next, where the component [B] is porous, it is preferable that the mean void ratio of the porous portion be in a range of 10 vol% or more and 97 vol% or less. Further, at an intermediate between the tip and the base of the blade, as for the mean void ratio in the porous portion in each of the three equivalent volumes which are divided by a plane orthogonal to a straight line connecting the leading edge and the trailing edge, the maximum mean void ratio preferably differs from the minimum mean void ratio by 3 vol% or more.

The straight line connecting the leading edge and the trailing edge is indicated by reference sign 16 in FIG. 6(a), and an example of a section orthogonal to the straight line is a plane indicated by reference sign 17 in FIG. 6(a), and division into three parts is performed with planes (cf. reference sign 34 in FIG. 6(b)) parallel to the section.

Particularly, in the porous portion of the three-divided component [B], as the volume fraction of a sample taken from an area with a width of 10 mm (i.e., thickness of 10 mm) along the section shown by reference sign 16 in FIG. 6, the mean void ratio in the porous part of the central portion (a portion sandwiched between the planes indicated by reference sign 34 in FIG. 6(b)) among the three-divided portions is preferably different from those in the porous portions in the other three-divided portions by 3 vol% or more.

When the central portion among the three-divided portions has a high mean void ratio, it can contribute weight reduction while maintaining stiffness, and make it easier to balance the rotor blade upon rotation, facilitating improvement of durability, which is preferable.

Moreover, when the void ratio is observed in the thickness direction at least in the central portion among the three-divided portions, it is preferable that the void ratio on the side in contact with the component [A] is lower while the void ratio observed in the central portion is high. The difference is preferably 4 vol% or more. When the void ratio in a portion close to the component [A] is low, anchoring properties between the component [A] and the component [B] can be enhanced, which is preferable.

Furthermore, in the rotor blade of the present invention, the component [D] forms a continuous part connecting the component [A]. That is, the rotor blade of the present invention preferably has a beam part which includes a continuous fiber base material including continuous reinforcing fibers and a matrix resin.

The component [D] may be directly connected to the component [A], or may be connected via another member such as the component [C]. An example of the beam part is indicated by reference sign 18 in FIG. 7. By continuously connecting the skin part, stiffness of the rotor blade can be dramatically enhanced.

An example of the thickness (for a sheet-like continuous fiber base material, thickness of the sheet; for a rod-like continuous fiber base material, thickness of the rod) of the beam part is Ts × 0.1 to Ts × 5 where Ts represents a thickness of the skin. The thickness can be selected based on the balance between lightweight and stiffness, and preferably Ts × 0.2 to Ts ×3, more preferably Ts × 0.3 to Ts ×2.

Furthermore, the reinforcing layer preferably includes continuous fibers, from the viewpoint of improving stiffness in the longitudinal direction. More preferably, the fibers are laminated in the 0° direction, with the longitudinal direction being 0°.

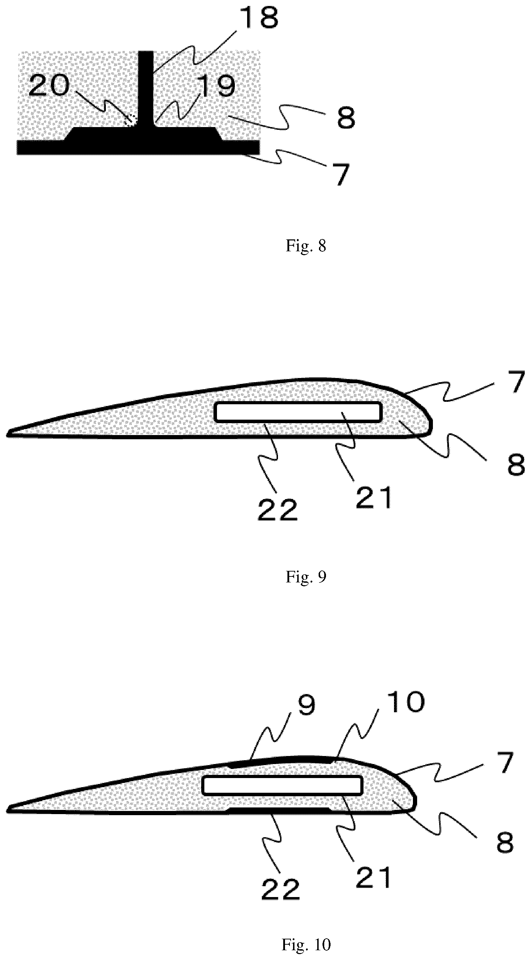

Furthermore, as an example shown by reference sign 20 in FIG. 8, the periphery of the portion where the component [D] and the component [A] are connected is reinforced with a reinforcing material, and it is preferable that the amount of the reinforcing material imparted decrease gradually with distance from the component [D]. It is preferable that the amount of the reinforcing material imparted decreases gradually with distance from the component [D], because it allows the load to be efficiently transferred to the beam part. Furthermore, when a surface is cut out where the angle formed by the component [D] and the component [A] is smallest at a portion where the component [D] and the component [A] are connected, it is preferable that the curvature R of the curved surface formed by the reinforcing material has a radius of 1 to 100 mm. When the curvature R has a radius of 1 mm or more, the load can be efficiently transferred to the beam part. When the radius is 100 mm or less, the mass as the rotor blade may become large. The radius is more preferably 1.5 to 50 mm, still more preferably 2 to 20 mm.

It is preferable that the component [B] is anchored to the component [D] as well. As described below, since the component [B] includes reinforcing fibers and therefore is a porous body having lightweight and high stiffness, it can support the beam part with high accuracy during molding and can produce a rotor blade with extremely high dimensional accuracy.

Further, both of the component [D] and a bonding part between the component [A] and the component [D] are anchored to the component [B], and therefore firmly support the beam part during continuous usage. Accordingly, dramatically high fatigue characteristics can be obtained.

An example of the rotor blade of the present invention preferably has a hollow part having an average sphere-equivalent diameter of more than 1 mm.

FIG. 9 shows an example of the rotor blade having a hollow part, which is preferable because it has a hollow part, thereby attaining weight reduction as well as adjustment of mass balance.

As described above, since the component [B] is a porous body and therefore can enhance stiffness in spite of its lightweight, it can highly accurately control the position at which the hollow part is to be placed during molding and can produce a rotor blade with extremely high mass accuracy.

Furthermore, in the hollow part, it is preferable that a continuous fiber base material including continuous reinforcing fibers and a matrix resin be placed on a surface forming the hollow part (the continuous fiber base material placed on the surface forming the hollow part is referred to as a "component [E]"), as shown by reference sign 22 in FIG. 9. That is, it is preferable that the hollow part be partitioned by the continuous fiber base material including continuous reinforcing fibers and a matrix resin.

The arrangement of the component [E] is desirable because it not only further improve stiffness of the rotor blade, but also prevents water absorption into the porous portion of the component [B] when water enters the rotor blade, thereby dramatically improving durability of the rotor blade.

An example of the thickness of the continuous fiber base material constituting the component [E] is Ts × 0.1 to Ts × 5, where Ts is the thickness of the skin. The thickness can be selected based on the balance between lightweight and stiffness, and is preferably Ts × 0.2 to Ts × 3, more preferably Ts × 0.3 to Ts × 2.

Furthermore, in the continuous fiber base material constituting the component [E], continuous fibers are preferably laminated in the 0° direction, with the longitudinal direction being 0°, from the viewpoint of improving stiffness in the longitudinal direction.

FIG. 10 shows an example of a rotor blade having a hollow part and a component [C], and FIG. 11 shows an example of a rotor blade having hollow parts and a component [D]. FIG. 12 shows an example of a cross-section of the rotor blade having hollow parts of various shapes, where the hollow parts may be circular or polygonal, and corners of the polygonal hollow parts may be chamfered.

Hereinafter, each component will be described in detail.

The component [A] is a member constituting the skin part, and includes a continuous fiber base material including continuous reinforcing fibers and a matrix resin. The types of the reinforcing fiber that can be used are not particularly limited, and examples thereof include metal fibers such as aluminum fibers, brass fibers, and stainless steel fibers; carbon fibers such as polyacrylonitrile (PAN)-based carbon fibers, rayon-based carbon fibers, lignin-based carbon fibers, and pitch-based carbon fibers (including graphite fibers); insulation fibers such as glass fibers, organic fibers such as aramid fibers, polyparaphenylene benzoxazole (PBO) fibers, polyphenylene sulfide fibers, polyester fibers, acrylic fibers, nylon fibers, and polyethylene fibers; and inorganic fibers such as silicon carbide fibers and silicon nitride fibers.

Furthermore, these fibers may be surface-treated. Examples of surface treatment include treatment with a coupling agent, treatment with a sizing agent, treatment with a binding agent, and adhesion treatment of an adhesive, in addition to coating treatment with a metal which is a conductor.

Further, these reinforcing fibers may be used singly or in combination of two or more types thereof.

Among them, from the viewpoint of weight reduction effect, carbon fibers such as PAN-based carbon fibers, pitch-based carbon fibers, and rayon-based carbon fibers, which are excellent in specific strength and specific stiffness, are preferably used. From the viewpoint of enhancing economic efficiency of the resulting molded article, glass fibers are preferably used. In particular, carbon fibers and glass fibers are preferably used in combination from the viewpoint of the balance between mechanical properties and economic efficiency. Furthermore, from the viewpoint of enhancing crash energy absorption and formativeness of the resulting molded article, aramid fibers are preferably used. In particular, carbon fibers and aramid fibers are preferably used in combination in terms of the balance between mechanical properties and crash energy absorption. From the viewpoint of enhancing electrical conductivity of the resulting molded article, reinforcing fibers coated with a metal such as nickel, copper, or ytterbium can be used.

Among them, discontinuous carbon fibers are more preferably used as discontinuous reinforcing fibers in the core material in the present invention. As the carbon fibers, PAN-based carbon fibers which are excellent in mechanical properties such as strength and elastic modulus are particularly preferably used. From the viewpoint of stiffness and durability, continuous carbon fibers are especially preferred.

The form of the continuous carbon fiber may be unidirectional, or biaxially or multi-axially woven form. A preferred example of the outermost layer is a woven fabric from the viewpoint of durability.

Furthermore, from the viewpoint of stiffness of the rotor blade, the continuous reinforcing fiber having tensile modulus of elasticity of preferably more than 200 GPa, more preferably in a range of 220 GPa or more and 400 GPa or less can be used. When the tensile modulus of elasticity of the reinforcing fiber is less than 200 GPa, stiffness of the rotor blade may be poor, and when it is more than 400 GPa, crystallinity of the reinforcing fiber is required to be increased, and it is likely to become difficult to produce such a reinforcing fiber.

The tensile modulus of elasticity of the reinforcing fiber within the above-described range is preferable in terms of further improvement of the rotor blade and improvement of the manufacturability of the reinforcing fiber. The tensile modulus of elasticity of the reinforcing fiber can be measured by the strand tensile test described in JIS R7601-1986.

In the present invention, as a matrix resin used for the component [A], a thermosetting resin such as unsaturated polyester resin, vinyl ester resin, epoxy resin, phenol (resol type) resin, urea resin, melamine resin, polyimide resin, maleimide resin, or benzoxazine resin can be preferably used. A blend of two or more types of resins may be applied.

Among them, epoxy resins are particularly preferred from the viewpoint of mechanical properties and heat resistance of the molded product. The epoxy resin is preferably included as a major component of the resins used in order to achieve its excellent mechanical properties. Specifically, the epoxy resin is preferably included in an amount of at least 60 mass% of the total mass of the resin composition.

As the epoxy resin, an epoxy resin using amines, phenols, a compound having a carbon-carbon double bond as a precursor is preferably used.

As a curing agent for the epoxy resin, any compound having an active group that can react with the epoxy group can be used. As the curing agent, a compound having an amino group, an acid anhydride group, or an azide group is suitable. More specific examples of the curing agent include dicyandiamide, diaminodiphenyl methane (including various isomers), diaminodiphenyl sulfone (including various isomers), aminobenzoate esters, various acid anhydrides, phenol novolac resins, cresol novolac resins, polyphenol compounds, imidazole derivatives, aliphatic amines, tetramethylguanidine, thiourea-added amine, carboxylic anhydride (e.g., methylhexahydrophthalic anhydride), carboxylic acid hydrazide, carboxylic acid amides, polymercaptan, Lewis acid complex (e.g., boron trifluoride ethyl amine complex). These curing agents may be used singly or in combination.

By using an aromatic diamine as a curing agent, a cured resin having good heat resistance is obtained. Particularly, various isomers of diaminodiphenyl sulfone are most suitable for obtaining cured resins having good heat resistance. When the aromatic diamine is used as a curing agent, it is preferably added so that an addition amount is stoichiometrically equivalent. In some cases, for example, equivalent ratio of about 0.7 or more and 0.8 or less can be used to obtain a cured resin having high elastic modulus.

Further, by using a combination of dicyandiamide and a urea compound (e.g., 3,4-dichlorophenyl-1,1-dimethylurea), or imidazoles as a curing agent, high heat resistance and water resistance can be attained while being cured at a relatively low temperature. Curing with an acid anhydride gives a cured resin having a lower water absorption compared to the case where an amine compound is used as the curing agent. Alternatively, these curing agents that are made latent, for example, microencapsulated can be used.

Among curing agents for epoxy resins, a combination of dicyandiamide and a urea compound is preferably used because curing can be readily attained within 10 minutes at a temperature of 145°C or more.

Alternatively, these epoxy resins and curing agents, or partially pre-reacted products thereof can be compounded in the composition. This method may be effective in adjusting viscosity and improving storage stability.

It is also suitable to dissolve a thermoplastic resin and then added to the above-described epoxy resin composition. Such a thermoplastic resin is preferably a thermoplastic resin generally having a bond selected from a carbon-carbon bond, an amide bond, an imide bond, an ester bond, an ether bond, a carbonate bond, a urethane bond, a thioether bond, a sulfone bond, or a carbonyl bond in its main chain, but may have a partially cross-linked structure. It may also be crystalline or amorphous. Particularly, it is suitable that at least one type of resin selected from the group consisting of polyamide, polycarbonate, polyacetal, polyphenylene oxide, polyphenylene sulfide, polyarylate, polyester, polyamideimide, polyimide (e.g., polyimide having a phenyltrimethylindane structure), polyetherimide, polysulfone, polyethersulfone, polyetherketone, polyetheretherketone, polyaramid, polyethernitrile, and polybenzimidazole is dissolved in the epoxy resin composition.

It is preferable that an epoxy resin is used as a matrix resin used for the component [A], from the viewpoint of durability. An example of the glass transition temperature obtained after curing is 120°C or more, more preferably 150°C or more, still more preferably 200°C or more. Since the rotor blade is used outdoors, a lack of heat resistance may result in poor durability. Accordingly, 120°C or more is preferred. The glass transition temperature can be measured, for example, by dynamic viscoelastic measurement while raising temperature at 5 °C/min.

A thermoplastic resin is also preferably used as the matrix resin used for the component [A], and the thermoplastic resin may be crystalline or amorphous.

Examples of the crystalline thermoplastic resin include polyester, polyolefin, polyoxymethylene (POM), polyamide (PA), polyarylene sulfide, polyketone (PK), polyetherketone (PEK), polyetheretherketone (PEEK), polyetherketoneketone (PEKK), polyethernitrile (PEN), fluorine-based resin, and liquid crystal polymer (LCP). Examples of polyester include polyethylene terephthalate (PET), polybutylene terephthalate (PBT), polytrimethylene terephthalate (PTT), polyethylene naphthalate (PEN), and liquid crystal polyester. Examples of polyolefin include polyethylene (PE), polypropylene (PP), and polybutylene. Examples of polyarylene sulfide include polyphenylene sulfide (PPS). Examples of fluorine-based resin include polytetrafluoroethylene.

Examples of the amorphous thermoplastic resin include, in addition to polystyrene, polycarbonate (PC), polymethyl methacrylate (PMMA), polyvinyl chloride (PVC), polyphenylene ether (PPE), polyimide (PI), polyamide imide(PAI), polyetherimide (PEI), polysulfone (PSU), polyether sulfone, and polyarylate (PAR). Other examples of the thermoplastic resin used for the core material may include phenoxy resins, as well as thermoplastic elastomers such as polystyrene-based, polyolefin-based, polyurethane-based, polyester-based, polyamide-based, polybutadiene-based, polyisoprene-based, fluororesin-based, or acrylonitrile-based thermoplastic elastomers, and copolymers and modified forms thereof. Among them, as the thermoplastic resin used for the core material, polyolefin, polyamide, polyester, polycarbonate, polystyrene, modified polyphenylene ether, or polyarylene sulfide is preferably used.

Among these non-crystalline thermoplastic resins, from the viewpoint of lightweight of the resulting molded article, polyolefin is preferably used; from the viewpoint of strength, polyamide is preferred; from the viewpoint of hygroscopicity, polyester is preferred; from the viewpoint of surface appearance, amorphous resins such as polycarbonate, polystyrene, and modified polyphenylene ether are preferred; from the viewpoint of heat resistance, polyarylene sulfide is preferred; and from the viewpoint of continuous service temperature, polyetheretherketone is preferably used.

A preferable example of the component [C], component [D], and component [E] is a continuous fiber base material including reinforcing fibers and a matrix resin, similar to those used in the component [A] mentioned above.

Furthermore, the continuous fiber base material including continuous reinforcing fibers and a matrix resin, which constitutes the component [C], component [D], and component [E] may be the same as or different from that constitutes the component [A]. By selecting and using the most suitable matrix resin, reinforcing fibers, and form of the reinforcing fiber depending on the physical properties and characteristics required for the component [C], component [D], and component [E], it is possible to reduce weight with good economical efficiency.

The component [B] is a member that constitutes the core part, and is a porous body including reinforcing fibers with a mass mean fiber length of 1 mm or more and 15 mm or less, and a resin.

FIG. 13 is a schematic view of an interface of an anchoring portion where the component [A] and component [B] are anchored. As shown in FIG. 13, the component [B] is a porous body constituted by reinforcing fibers 26 and a resin 27 and voids 25.

In the rotor blade of the present invention, it is preferable that some of the reinforcing fibers included in the component [B] intrude beyond the interface with the component [A].

The state where the reinforcing fibers included in the component [B] intrude beyond the interface with the component [A] is exemplified by the embodiment shown in FIG. 13. That is, as shown in FIG. 13, at the interface formed by the matrix resin constituting the component [A] and the resin constituting the component [B], the reinforcing fibers derived from the component [B] are present in both the matrix resin of the component [A] and the resin of the component [B]. In other words, the matrix resin of the component [A] and the resin of the component [B] are considered to be strongly bonded due to anchoring by the reinforcing fibers derived from the component [B].

The degree of intrusion of the reinforcing fibers derived from the component [B] is not limited as long as it does not impair the effect of the present invention. However, from the viewpoint that the core part functions as a bonding medium and affects the bonding properties between the skin part and the core part, the length of the reinforcing fibers derived from the component [B] intruding beyond the interface with the component [A] (intrusion length) is preferably 5 $\mu$m or more, more preferably 10 $\mu$m or more.

The intrusion length of reinforcing fibers derived from the component [B] into the component [A] is indicated by the distance between a surface that is parallel to the macroscopic boundary surface 33 between the component [A] and component [B] and is in contact with the tip of the fiber intruding into the skin and a surface that is parallel to the macroscopic boundary surface and is in contact with the base of the fiber intruding into the skin, i.e., a point where the fiber intruding into the skin part from the core part. To take the reinforcing fiber shown in FIG. 13 as an example, it is the length of the zone indicated by reference sign 29. The macroscopic boundary surface 33 between the component [A] and component [B] refers to an observed boundary between the component [A] and component [B]. Specifically, in an image captured at a magnification of 1000x using a laser microscope in the vicinity of the boundary between the component [A] and component [B] in the section of the rotor blade, a straight line drawn so that the area occupied by the matrix resin of the component [A] beyond the straight line is equal to the area occupied by the matrix resin and the voids of the component [B] beyond the straight line, or a plane including a straight line maximizing the above-described area in the captured image and extending in the depth direction of the captured image, in a case where a plurality of such straight lines exist, is understood as the boundary. The section of the rotor blade refers to a plane passing through the rotation axis, the leading edge, and the trailing edge. Among the measured penetration lengths, the maximum value is taken as the maximum penetration length. Specifically, the maximum penetration length of the reinforcing fibers in the core into the skin can be measured as follows. The bonding part between the skin and the core of the rotor blade is cut out, and its section along the thickness direction is photographed at 10 arbitrary locations (10 images) at a magnification of 1000x using a laser microscope. From the images obtained, the penetration length of each single fiber penetrating into the skin is determined for the reinforcing fibers in the core, and the maximum value is taken as the maximum penetration length.

Examples of the resin 27 include thermoplastic resins and thermosetting resins. In the present invention, a thermosetting resin and a thermoplastic resin may be blended. In such an event, the thermosetting resin or thermoplastic resin that accounts for more than 50 mass% of the components constituting the resin is taken as the resin type of resin 27.

In an embodiment of the present invention, the resin 27 desirably includes at least one or more types of the thermoplastic resin. Examples of the thermoplastic resin include thermoplastic resins selected from crystalline resins, for example, "polyesters such as polyethylene terephthalate (PET), polybutylene terephthalate (PBT), polytrimethylene terephthalate (PTT), polyethylene naphthalate (PEN), liquid crystalline polyester; polyolefins such as polyethylene (PE), polypropylene (PP), polybutylene; polyoxymethylene (POM); polyamide (PA); polyarylene sulfide such as polyphenylene sulfide (PPS); polyketone (PK); polyether ketone (PEK); polyetheretherketone (PEEK); polyether ketone ketone (PEKK); polyether nitrile (PEN); fluorine-based resins such as polytetrafluoroethylene; liquid crystalline polymer (LCP)"; amorphous resins such as "styrene-based resin, as well as polycarbonate (PC), polymethyl methacrylate (PMMA), polyvinyl chloride (PVC), polyphenylene ether (PPE), polyimide (PI), polyamide imide (PAI), polyether imide (PEI), polysulfone (PSU), polyether sulfone, polyarylate (PAR)"; in addition, phenol-based resin, phenoxy resin, and further polystyrene-based, polyolefin-based, polyurethane-based, polyester-based, polyamide-based, polybutadiene-based, polyisoprene-based, fluorine-based resins, and thermoplastic elastomers such as acrylonitrile-based thermoplastic elastomers; and copolymers and modified polymers thereof.

Among them, polyolefins are desirably used from the viewpoint of lightweight of the resulting rotor blade, polyamides are desirably used from the viewpoint of strength, amorphous resins such as polycarbonates and styrene-based resins are desirably used from the viewpoint of surface appearance, polyarylene sulfides are desirably used from the viewpoint of heat resistance, polyetherimide and polyetheretherketone are desirably used from the viewpoint of continuous service temperature, and further fluorine-based resins are desirably used from the viewpoint of chemical resistance.

In an embodiment of the present invention, the resin 27 desirably includes at least one or more types of the thermosetting resin. Examples of the thermosetting resin include unsaturated polyesters, vinyl esters, epoxy resins, phenol resins, urea resins, melamine resins, thermoset polyimides, copolymers and modified forms thereof, and resins which are blends of at least two types thereof. Furthermore, the structure body according to the present invention may contain an impact resistance improver such as an elastomer or rubber component, and other fillers and additive as long as the object of the present invention is not impaired.

Examples of the filler and the additive include inorganic fillers, flame retardants, electrical conductivity imparting agents, crystal nucleating agents, UV absorbers, antioxidants, vibration damping agents, antibacterial agents, insect repellents, deodorants, anti-coloring agents, heat stabilizers, mold release agents, antistatic agents, plasticizers, lubricants, colorants, pigments, dyes, foaming agents, anti-foaming agents, and coupling agents.

The volume fraction of the resin 27 is preferably in the range of 2.5 vol% or more and 85 vol% or less with respect to the volume of the component [B] being 100 vol%. When the volume fraction of the resin 27 is less than 2.5 vol%, it may be impossible to bond the reinforcing fibers in the porous body together and obtain a sufficient reinforcing effect of the reinforcing fibers, resulting in insufficient mechanical properties, particularly bending properties, of the structure body, which is undesirable. On the other hand, when the volume fraction of the resin 27 is more than 85 vol%, the amount of the resin is too large, and hence it may become difficult to take a void structure, which is undesirable.

Examples of the reinforcing fiber include metal fibers such as aluminum, brass, stainless steel fibers; PAN-based, rayon-based, lignin-based, pitch-based carbon fibers; organic fibers such as aramid, PBO, polyphenylene sulfide, polyester, acrylic, nylon, polyethylene; inorganic fibers such as graphite fibers, glass fibers, silicon carbide, and silicon nitride. Furthermore, these fibers may be surface-treated. Examples of surface treatment include treatment with a coupling agent, treatment with a sizing agent, treatment with a binding agent, and adhesion treatment of an adhesive, in addition to coating treatment with a metal as a conductor. Further, these reinforcing fibers may be used singly or in combination of two or more types thereof.

Among them, from the viewpoint of weight reduction effect, carbon fibers such as PAN-based, pitch-based, and rayon-based carbon fibers, which are excellent in specific strength and specific stiffness, are desirably used. From the viewpoint of enhancing economic efficiency of the resulting structure body, glass fibers are desirably used. In particular, carbon fibers and glass fibers are desirably used in combination in terms of the balance between mechanical properties and economic efficiency.

Furthermore, from the viewpoint of enhancing crash energy absorption and formativeness of the resulting structure body, aramid fibers are desirably used. In particular, carbon fibers and aramid fibers are desirably used in combination in terms of the balance between mechanical properties and crash energy absorption. From the viewpoint of enhancing electrical conductivity of the resulting structure body, reinforcing fibers coated with metal can be used. Among them, PAN-based carbon fibers which are excellent in mechanical properties such as strength and elastic modulus can be more desirably used.

The reinforcing fibers included in the component [B] are desirably discontinuous, approximately monofilamentous, and randomly dispersed. With the reinforcing fiber according to such an aspect, it becomes easier to mold a sheet-like structure body precursor or the structure body into a complicated shape, when it is molded by applying an external force.

Furthermore, with the reinforcing fiber according to such an aspect, the voids formed by the reinforcing fibers are densified, and weak parts at the ends of the fiber bundles of the resin reinforcing fibers in the porous body can be minimized, which provides isotropy in addition to excellent reinforcing efficiency and reliability.

Here, approximately monofilamentous or in the state of approximate monofilaments refers to reinforcing fiber single yarns existing as less than 500 fine-denier strands. More desirably, they are dispersed in the state of monofilaments, i.e., in the state of single fibers.

Specifically, being dispersed in the state of approximate monofilaments or in the state of monofilaments means that a percentage of single fibers having two-dimensional contact angle of 1° or more (hereinafter, also referred to as fiber dispersion ratio) is 80% or more for reinforcing fibers arbitrarily selected in the porous body, i.e., a percentage of bundles in which two or more single fibers are in contact with and parallel to each other is less than 20% in the porous body. Accordingly, in this context, it is particularly preferable that the mass fraction of the fiber bundle including 100 or less filaments corresponds to 100% at least in the reinforcing fiber.

The two-dimensional contact angle, for discontinuous reinforcing fibers, is an angle formed between a single fiber and another single fiber in contact therewith, and defined as an acute angle, falling within a range of 0° or more and 90° or less, formed between single fibers which are in contact with each other. The two-dimensional contact angle will be further explained with reference to figures. FIG. 14 is schematic views showing an example of the dispersion state of the reinforcing fibers in a reinforcing fiber mat when observed from the plane direction (FIG. 14(a)) and from the thickness direction (FIG. 14(b)). In FIG. 14(a), a single fiber 30 is observed intersecting with another single fiber. In FIG. 14(b), a single fiber 30b is not in contact with a single fiber 30c. In this case, for the reference single fiber, the contacting single fibers 30 and an acute angle A, falling within a range of 0° or more and 90° or less of the two angle formed between the two single fibers are to be evaluated for the two-dimensional contact angle.

Methods of measuring two-dimensional contact angle are not particularly limited. An example is a method of observing orientation of the reinforcing fibers from the surface of the porous body. In this case, the surface of the rotor blade is polished to expose the reinforcing fibers, making them more easily observed.

Another example is a method of performing X-ray CT transmission observation to capture images of the orientation of the reinforcing fibers. For the reinforcing fibers with high X-ray transparency, it is desirable to mix tracer fibers into the reinforcing fibers or to apply a tracer agent to the reinforcing fibers, as this makes it easier to observe the reinforcing fibers. An exemplary method for a case where it is difficult to measure using the above-described method include placing the rotor blades at high temperature in a heating furnace or the like to burn off resin components, then removing the reinforcing fibers, and observing orientation of the reinforcing fibers with an optical microscope or an electron microscope.

Based on the above-mentioned observation method, the fiber dispersion ratio is measured by the following procedures. That is, two-dimensional contact angles between a randomly selected single fiber (single fiber 30 in FIG. 14) and all single fibers in contact with the randomly selected single fiber are measured. Such a measurement is performed for 100 single fibers, and the percentage is calculated from the ratio of the total number of all single fibers for which the two-dimensional contact angles are measured to the number of single fibers having a two-dimensional contact angle of 1° or more.

Furthermore, it is particularly desirable for the reinforcing fibers to be randomly dispersed. In this specification, "the reinforcing fibers are randomly dispersed" means that the arithmetic mean value of the two-dimensional orientation angles of arbitrarily selected reinforcing fibers in the porous body is within the range of 30° or more and 60° or less. Such a two-dimensional orientation angle refers to the angle formed between a single fiber of the reinforcing fiber 3 and a single fiber that intersects with this single fiber, and is defined as an acute angle of the angles formed between the intersecting single fibers, which falls within the range of 0° or more and 90° or less.

The two-dimensional orientation angle will be further explained with reference to figures. In FIG. 14(a) and FIG. 14(b), when a single fiber 30 is taken as a reference, the single fiber 30 intersects with other single fibers. In this specification, intersection refers to a state where a reference single fiber is observed intersecting with another single fiber on a two-dimensional plane being observed, and the single fiber 30 does not necessarily have to be in contact with another single fiber. This also applies to a state where the single fiber is observed intersecting with another single fiber when viewed in projection. In other words, when looking at the reference single fiber 30, all of the other single fibers are to be evaluated for the two-dimensional orientation angle, and in FIG. 14(a), the two-dimensional orientation angle is an angle A, an acute angle of the two angles formed between the two intersecting single fibers, which falls within the range of 0° or more and 90° or less.

Examples of the method of measuring the two-dimensional orientation angle is not particularly limited, and include a method in which a surface of the component [B] is exposed, and the orientation of the reinforcing fibers is observed from the surface. The method can employ a means similar to that in the above-mentioned method of measuring two-dimensional contact angle. The mean value of the two-dimensional orientation angles is measured by the following procedures. That is, the mean value of the two-dimensional orientation angle between a randomly selected single fiber (single fiber 30 in FIG. 14) and all the single fibers intersecting therewith is measured. When there are a large number of single fibers that intersect with a certain single fiber, 20 other intersecting single fibers are randomly selected and measured, and the resulting arithmetic mean value may be used as a substitute. The measurement is repeated 5 times in total with other reference single fibers, and the arithmetic mean value is calculated as the arithmetic mean value of the two-dimensional orientation angle.

The reinforcing fibers are dispersed in the state of approximately monofilamentous and randomly, which maximizes the performance provided by the reinforcing fibers dispersed in the state of approximately monofilamentous mentioned above. In addition, isotropy can be imparted to mechanical properties in the porous body. From such a viewpoint, it is desirable that the fiber dispersion ratio of the reinforcing fibers is 90% or more, and is more desirably closer to 100%. The arithmetic mean value of the two-dimensional orientation angle of the reinforcing fiber is desirably in the range of 40° or more and 50° or less, and is more desirably closer to 45°, an ideal angle.

On the other hand, examples of reinforcing fibers which do not take a nonwoven fabric form include sheet base materials in which reinforcing fibers are arranged unidirectionally, woven fabric base materials, and non-crimp base materials. In these forms, the reinforcing fibers are regularly and densely arranged, so the voids in the porous body are reduced, which makes it extremely difficult for the resin to be impregnated. As a result, unimpregnated areas may be formed, or the options for impregnation means and resin types are greatly limited.

The form of the reinforcing fibers in the component [B] is desirably discontinuous reinforcing fibers from the viewpoint of easy impregnation with resin and easy adjustment of the amount thereof.

The volume fraction of reinforcing fiber is preferably in the range of 0.5 vol% or more and 55 vol% or less. When the volume fraction of reinforcing fiber is less than 0.5 vol%, the reinforcing effect derived from the reinforcing fibers may be insufficient. On the other hand, when the volume fraction of reinforcing fiber is more than 55 vol%, the volume fraction of the resin with respect to that of the reinforcing fiber is relatively smaller, and thus the reinforcing fibers in the porous body may not be bound together to provide sufficient reinforcing effect of the reinforcing fibers and sufficient mechanical properties, especially flexural properties, of the porous body.

The reinforcing fibers are coated with a resin, and the thickness of the resin, i.e., the length of the portion where no reinforcing fibers intervene but only resin exists, is desirably within the range of 1 $\mu$m or more and 15 $\mu$m or less. As for the coating state of the reinforcing fibers coated with resin, it is sufficient that at least the points where single fibers of the reinforcing fibers constituting the porous body intersect with each other are coated, from the viewpoint of morphological stability of the porous body, ease of thickness control, and degree of freedom. In a still more desirable aspect, the resin desirably covers the reinforcing fiber with the thickness mentioned above. Such a state means that the resin prevents the surface of the reinforcing fiber from being exposed, in other words, the reinforcing fibers form an electric wire-like film with the resin. As a result, the porous body further has morphological stability and develops sufficient mechanical properties. Furthermore, the coating state of the reinforcing fibers coated with resin does not need to be such that the reinforcing fibers are thoroughly coated, but are coated only to the extent that the shape stability, flexural modulus, and flexural strength of the porous body according to the present invention are not impaired.

In the rotor blade of the present invention, the mass mean fiber length of the reinforcing fibers included in the component [B] is within the range of 1 mm or more and 15 mm or less. This can enhance the reinforcing efficiency of the reinforcing fibers and impart excellent mechanical properties to the porous body. When the mass mean fiber length of the reinforcing fibers is less than 1 mm, voids cannot be formed efficiently in the porous body, resulting in a higher specific gravity. In other words, it becomes difficult to obtain a porous body of the desired thickness with the same mass.

On the other hand, when the mass mean fiber length of the reinforcing fibers is longer than 15 mm, the reinforcing fibers tend to bend under their own weight in the porous body, which inhibits the development of mechanical properties. An exemplary mass mean fiber length is more preferably 1.5 mm or more and 12 mm or less, still more preferably 2 mm or more and 11 mm or less. The mass mean fiber length can be calculated as a mean length of 400 reinforcing fibers by measuring their lengths to the nearest 10 $\mu$m, the 400 reinforcing fibers being randomly selected from the reinforcing fibers that remain after removing the resin components of the porous body by burning, elution, or other methods.

In the present invention, the component [B] is a porous body and includes voids, i.e., portions where no substance other than gas exists. Examples of such voids include spaces formed by the resin-coated reinforcing fibers which become columnar supports that overlap or intersect each other. For example, when a porous body is obtained by heating a precursor of the porous body in which reinforcing fibers are preimpregnated with a resin, the resin melts or softens upon heating, which causes the reinforcing fibers to become raised, thereby forming voids. This is based on the property of the internal reinforcing fibers in the precursor of the porous body, which have been compressed by pressure, to be raised by a raising force resulting from the elastic modulus of the reinforcing fibers.

The void content in the porous body is preferably in the range of 10 vol% or more and 97 vol% or less. When the void content is less than 10 vol%, the specific gravity of the porous body becomes higher, and sufficient lightweight may not be attained.

On the other hand, when the void content is more than 97 vol%, in other words, the thickness of the resin coating around the reinforcing fibers becomes thinner, and the reinforcing fibers in the porous body are not sufficiently reinforced with each other, which may result in poor mechanical properties. Therefore, the upper limit of the void content is desirably 97 vol%. In the present invention, the void content is determined as a volume fraction, assuming that the sum of the volume fractions of the resin, reinforcing fibers, and voids constituting the porous body is 100 vol%.

The specific flexural stiffness of the porous body expressed as $Ec^{1/3} \cdot \rho^{-1}$ is preferably in the range of 3 or more and 20 or less, where Ec indicates the flexural modulus of the porous body, and $\rho$ indicates the specific gravity of the structure body 1. When the porous body has specific flexural modulus of less than 3, the porous body also has high specific gravity even though it has high specific modulus, and the desired weight reduction effect may not be obtained, which is undesirable. On the other hand, when the porous body has specific flexural modulus of more than 20, although weight reduction effect is sufficient, flexural modulus is low, which is undesirable due to difficulty in retaining the desired shape as the porous body and poor flexural modulus of the porous body itself.

Generally, steel and aluminum have specific flexural stiffness of 1.5 or less. The porous body has extremely superior range of specific flexural modulus compared to these materials. Furthermore, it has specific flexural modulus of 3 or more, more desirably 5 or more, which is more than 2.3, a general specific flexural modulus of a carbon fiber reinforced resin composite material attracting attention for its weight reduction effect.

The flexural modulus Ec of the porous body is 3 GPa or more, desirably 6 GPa or more. The flexural modulus Ec of the porous body of less than 3 GPa is undesirable because it restricts the range of use as the porous body. In order to facilitate the design of the porous body, the flexural modulus desirably has isotropy. There is no limitation on the upper limit of the flexural modulus. In general, however, in a structure body including reinforcing fibers and a resin, the upper limit can be a value calculated from the elastic modulus of each of the reinforcing fibers and the resin, which are components of the structure body.

The specific gravity $\rho$ of the porous body is desirably 0.9 g/cm$^3$ or less. The specific gravity $\rho$ of the porous body of more than 0.9 g/cm$^3$ means that the mass will increase upon formation of a porous body, leading to an increase in the mass upon molding into a rotor blade, which is undesirable. There is no limitation on the lower limit of the specific gravity. Generally, in a porous body including reinforcing fibers and a resin, the lower limit is the value calculated from the volume ratio of each of the components: reinforcing fibers, resins, and voids. The specific gravity of the rotating body according to the present invention is desirably 0.03 g/cm$^3$ or more from the viewpoint of maintaining mechanical properties.

The reinforcing fibers in the component [B] of the present invention desirably takes the form of a nonwoven fabric from the viewpoint of ease of impregnation of the reinforcing fibers with a resin. It is desirable to take the form of nonwoven fabric, because of ease of impregnation of thermoplastic resin which is generally considered to have high viscosity, in addition to ease of handling of the nonwoven fabric itself. The nonwoven fabric form used herein refers to a form in which strands and/or monofilaments of reinforcing fibers are dispersed in a state of plane without regularity. Examples include chopped strand mats, continuous strand mats, paper mats, carding mats, and air laid mats (hereinafter collectively referred to as reinforcing fiber mats).

An exemplary method of producing reinforcing fiber mats constituting the porous body is a method in which reinforcing fibers are previously dispersed in the state of strands and/or approximate monofilaments to produce a reinforcing fiber mat.

Examples of methods of producing a reinforcing fiber mat as a known methods include dry processes such as an air laid method in which reinforcing fibers are dispersed by an air flow to make a sheet, a carding method including arranging the shape of the reinforcing fibers to form them into a sheet while mechanically combing them; and wet processes by a Radolite method in which reinforcing fibers are stirred in water to make paper.

For a dry process, examples of a means of bringing the reinforcing fibers closer to the state of monofilaments include a method including providing a fiber-opening bar and a method further including vibrating the fiber-opening bar, a method further including making the opening of the card finer, and a method including adjusting the rotational speed of the card.

For a wet process, examples include a method of adjusting stirring conditions of the reinforcing fibers, a method of diluting the concentration of the reinforcing fibers in a dispersion, a method of adjusting viscosity of the dispersion, and a method of suppressing vortexes during transportation of the dispersion.

In particular, reinforcing fiber mats are desirably produced by a wet process, and the percentage of reinforcing fibers in the reinforcing fiber mat can be easily adjusted by increasing the concentration of input fibers or by adjusting the flow velocity (flow rate) of the dispersion and the speed of the mesh conveyor. For example, by decreasing the speed of the mesh conveyor relative to the flow velocity of the dispersion, the orientation of the fibers in the resulting reinforcing fiber mat is less likely to be oriented in the take-up direction, making it possible to produce a bulky reinforcing fiber mat. Reinforcing fiber mats may include reinforcing fibers alone, reinforcing fibers may be mixed with powder- or fiber-like matrix resin components, reinforcing fibers may be mixed with organic or inorganic compounds, or reinforcing fibers may be cemented together using resin components.

Furthermore, the reinforcing fiber mats may be previously impregnated with a resin to make a porous body precursor. From the viewpoint of ease of production, it is desirable to use as a method of producing the porous body precursor according to the present invention a method of impregnating a reinforcing fiber mat by applying pressure to the reinforcing fiber mat while heating it to a temperature equal to or more than a melting point or a softening point of the resin. Specifically, a desirable exemplary method is a method in which a laminate including the reinforcing fiber mat with resin placed on both sides thereof in the thickness direction is melt-impregnated.

As equipment to perform each of the above-described methods, compression molding machines or double belt presses can be suitably used. A batch type equipment corresponds to the former, and can be used as an intermittent press system in which two or more machines, one for heating and the other for cooling, are arranged in a line, so that productivity can be improved. A continuous type equipment corresponds to the latter and enables continuous processing with ease, and thus it is excellent in continuous productivity.

When producing the porous body according to the present invention, it is preferable to employ a manufacturing method including at least the following steps [1] and [2] from the viewpoint of ease of production:

Step [1]: a step of producing a porous body precursor by applying pressure while heating to a temperature equal to or more than a melting point or a softening point of the resin, thereby impregnating a reinforcing fiber mat with the resin.
Step [2]:a step of expanding the porous body precursor by adjusting the thickness while being heated.

The step [2] is a step of expanding the porous body precursor, obtained in the step [1], by adjusting the thickness while being heated. As for a temperature to which the porous body is heated, in a case where the resin constituting the porous body is a thermoplastic resin, it is preferable to provide a sufficient amount of heat to melt or soften the resin, from the viewpoint of thickness control of the porous body to be produced and production speed. Specifically, it is preferable that the temperature be higher than the melting point by 10°C or more, and provide a temperature equal to or less than the pyrolysis temperature of the thermoplastic resin. Furthermore, when a thermosetting resin is used as the resin, it is preferable to provide sufficient heat to melt or soften the thermosetting resin raw material, before formation of a crosslinked structure is formed and cured, from the viewpoint of thickness control of the porous body to be produced and production speed.

Any method can be used for thickness control as long as it is possible to control the structure body precursor to be heated to a desired thickness. From the viewpoint of ease of production, examples of a preferable method include a method of restricting the thickness using a metal plate or the like, and a method of controlling the thickness by pressure applied to the structure body precursor. As equipment to perform the above-described method, a compression molding machine or a double belt press can be suitably used. A batch type equipment corresponds to the former, and can be used as an intermittent press system in which two or more machines, one for heating and the other for cooling, are arranged in a line, so that productivity can be improved. A continuous type equipment corresponds to the latter and enables continuous processing with ease, and thus it is excellent in continuous productivity.

The timing of forming the incision is not particularly limited. The incision may be formed in the porous precursor at the stage of step [1], or the incision may be formed in the porous body obtained in the step [2]. Alternatively, when the previously divided porous precursor or porous body is molded together with the component [A] in the step [2] or the subsequent step, an incision may be consequently formed in which the component [A] enters the component [B].

As for the timing of forming the convexo-concave part, the convexo-concave part is desirably formed in the step [2] or the subsequent step from the viewpoint of shape retention of the convexo-concave part. When the convexo-concave part is formed before the step [2], there is a risk that the convexo-concave part may be smoothened upon expansion. An exemplary implementation method is a method in which the porous precursor obtained in the step [1] is expanded along a mold having a concave-convex shape.

Examples of the reinforcing fiber mat that does not take a form of a nonwoven fabric include the sheet base materials, woven fabric base materials, and non-crimp base materials, in which reinforcing fibers are arranged unidirectionally. In these forms, the reinforcing fibers are regularly and densely arranged. Accordingly, there are few void parts in the reinforcing fiber mat, and the thermoplastic resin does not form a sufficient anchoring structure. Therefore, when it is used as a core-forming layer, bonding ability will be reduced. Furthermore, when the resin is a thermoplastic resin, impregnation becomes extremely difficult, forming unimpregnated parts and greatly limiting the options for impregnation means and resin types.

Examples

The present invention will be explained in more detail with reference to the examples described below. The present invention is not construed as limited to these specific examples.

(1) Density $\rho$f of reinforcing fiber

The density $\rho$f of a reinforcing fiber was measured according to JIS R7603(1999) Method A: Liquid Replacement Method.

(2) Density $\rho$r of resin sheet

The density $\rho$r of a resin sheet was measured according to JIS K7112(1999) Method A: Underwater Replacement Method.

(3) Volume fraction Vf of reinforcing fiber in porous body

After measuring the mass Ws of the porous body, the porous body was heated in air at 500°C for 30 minutes to burn off the resin component, and the mass Wf of the remaining reinforcing fibers was measured and calculated according to the following formula:

$$Vf\ (\ vol\%\ ) = (Wf/\rho f)/\{Wf/\rho f + (Ws - Wf)/\rho r\} \times 100$$

$\rho f$: density (g/cm$^3$) of reinforcing fiber
$\rho r$: density (g/cm$^3$) of resin sheet.

(4) Density $\rho$ of porous body

A test piece was cut out from the porous body, and an apparent density of the porous body was measured with reference to JIS K7222 (2005). The dimension of the test piece was 100 mm in length and 100 mm in width. The length, width, and thickness of the test piece were measured with a micrometer, and the volume V of the test piece was calculated from the obtained values. The mass M of the cut out test piece was measured with an electronic balance. The obtained mass M and volume V were assigned to the following formula to calculate the density $\rho$ of the porous body:

$$\rho\ [g/cm^3] = 10^3 \times M\ [g]\ /\ V\ [mm^3].$$

(5) Flexural test of porous body

A test piece was cut out from the porous body, and a flexural modulus was measured according to ISO 178 (1993). The test pieces were cut out in four directions: 0°, +45°, -45°, and 90° directions, with reference to arbitrary direction being 0° direction, to prepare the test pieces. The number of measurements for each direction was n = 5, and the arithmetic mean value was taken as a flexural modulus Ec. As the measurement device, "Instron (registered trademark)" 5565 type universal testing system (manufactured by Instron Japan Co., Ltd.) was used. The specific flexural stiffness of the structure body was calculated from the obtained results using the following formula:

$$Specific\ flexural\ stiffness = Ec^{1/3} \cdot \rho^{-1}.$$

(6) Volume fraction of void in porous body

A test piece of 10 mm in length and 10 mm in width was cut out from the porous body, and the section was observed with a scanning electron microscope (SEM) (S-4800 model manufactured by Hitachi High-Technologies Corporation), and ten equally spaced points on the surface of the porous body were photographed at a magnification of 1000x. For each image, an area Aa of the void in the image was determined. Furthermore, the area Aa of the void is divided by the area of the entire image to calculate the void ratio. The volume fraction of the voids in the porous body was determined from an arithmetic mean of the void ratio at a total of 50 points photographed, 10 points on each of the five test pieces. The arithmetic mean of them is taken as the mean void ratio. The volume fraction of the voids in the three-divided parts of the porous body was measured on a test piece of 10 mm in length and 10 mm in width cut out along a straight line connecting the leading edge and the trailing edge for each of the parts divided by planes orthogonal to the straight line connecting the leading edge and the trailing edge at the center between the tip and the base of the blade into three parts so that each part has the same volume. The volume fraction of the voids is similar to that in the above-mentioned method.

(7) Volume fraction of resin in porous body

The sum of the volume fractions of the reinforcing fibers and voids obtained above was subtracted from 100 vol% to obtain the volume fraction of the resin.

(8) Maximum penetration length of reinforcing fibers into skin

The bonding part between the skin part and the core part of the rotor blade was cut out, and the section in the thickness direction was photographed at 10 arbitrary points (10 images) at a magnification of 1000x using a laser microscope (VK-9510, manufactured by KEYENCE CORPORATION). From the obtained images, the penetration length of each single fiber of the reinforcing fibers in the core, penetrating into the skin was determined with reference to the macroscopic boundary surface, and the maximum value was taken as the maximum penetration length. As for the macroscopic boundary surface, a straight line is drawn on the above-described images photographed at a magnification of 1000x so that the area occupied by the matrix resin of the component [A] existing beyond the straight line is equal to the area occupied by the matrix resin and voids of the component [B] existing beyond the straight line, and a plane including the straight line and extending in the depth direction of the image is taken as the macroscopic boundary surface.

(9) [Carbon fiber]

Continuous carbon fibers with a total of 12,000 single yarns were obtained from copolymers mainly containing polyacrylonitrile by spinning, sintering processing, and surface oxidation processing. The properties of the continuous carbon fiber are as follows:

Single fiber diameter: 7 $\mu$m
Density: 1.8 g/cm$^3$
Tensile strength: 4,600 MPa
Tensile modulus of elasticity: 220 GPa.

(10) [PP Resin]

A resin sheet including 80 mass% of an unmodified polypropylene resin ("Prime Polypro" (registered trademark) J105G manufactured by Prime Polymer Co., Ltd.) and 20 mass% of an acid-modified polypropylene resin ("ADMER" (registered trademark) QB510 manufactured by Mitsui Chemicals, Inc.) and having a weight per unit area of 100 g/m$^2$ of was produced. The density of the obtained PP resin sheet was 0.92 g/cm$^3$.

(11) [Reinforcing fiber mat]

The carbon fibers obtained in (9) [Carbon fiber] described above were cut to a length of 6 mm to obtain chopped carbon fibers (CF1). The chopped carbon fibers were fed into a cotton opener to obtain a cotton-like reinforcing fiber aggregate including almost no reinforcing fiber bundles having the initial thickness. This reinforcing fiber aggregate was fed into a carding machine having a cylinder roll with a diameter of 600 mm to form a sheet-like web including reinforcing fibers. In this event, the rotation speed of the cylinder roll was 320 rpm, and the doffer speed was 13 m/min. The webs were stacked to obtain a reinforcing fiber mat 1. The reinforcing fibers were dispersed in the state of approximate monofilaments in the obtained reinforcing fiber mat 1. The reinforcing fiber mat 1 had a mass mean fiber length Lf of 6 mm, and a weight per unit area of 50 g/m$^2$.

(12) [Precursor of porous body]

A laminate was produced by stacking three sheets of laminated body in which the reinforced fiber mat 1 as the reinforcing fiber mat and the PP resin as the resin sheet were placed in the order of [resin sheet / reinforcing fiber mat / resin sheet / reinforcing fiber mat / resin sheet / reinforcing fiber mat / resin sheet / reinforcing fiber mat / reinforcing fiber mat / resin sheet / reinforcing fiber mat / resin sheet / reinforcing fiber mat / resin sheet / reinforcing fiber mat / resin sheet]. Next, a precursor of the porous body was obtained through the following steps (I) to (III).

(I) The laminate is placed in a mold cavity (in the form of flat plate) for press molding preheated to 230°C, and the mold is closed.
(II) Then, after held for 120 seconds, pressure of 3 MPa is applied and held for another 60 seconds.
(III) While maintaining the pressure, the cavity temperature is cooled to 50°C, and the precursor of the porous body is removed.

(13) [Porous body]

The porous body was obtained by designing the precursor of the porous body to a predetermined shape and mass through the following steps (I) to (III).

(I) The laminate is placed in a mold cavity (in the form of a rotor blade) for press molding preheated to 230°C, and the mold is closed.

(II) Then, after held for 120 seconds, pressure of 3 MPa is applied and held for another 60 seconds.

(III) While maintaining the pressure, the cavity temperature is cooled to 50°C, and the obtained porous body is removed.

The section observation revealed voids with columnar supports of reinforcing fibers in the obtained porous body.

The following cores were prepared: core 1 as a porous body; core 2 with an incision which has a depth of 1 mm and accounts for 5 vol% of the volume of the core 2; core 3 with an incision which has a depth of 2 mm and accounts for 15 vol% of the volume of the core 3; and core 4 including a convexo-concave parts having a depth of 0.1 mm formed on the surface thereof. The convexo-concave part was formed by embossing the mold used in the steps (I) to (III) described above. As a comparative example, core 5 with an incision which has a depth of 1 mm and accounts for 5 vol% of the volume of the core 5 was prepared similarly to the core 2, using "EFCELL" (registered trademark), a polypropylene sheet with low foaming ratio manufactured by Furukawa Electric Co., Ltd., in place of the component [B]. Further, core 6 with an incision provided similarly to the component core 1 was prepared using "EFCELL" (registered trademark), a polypropylene sheet with low foaming ratio manufactured by Furukawa Electric Co., Ltd.

(14) Production of rotor blade

A carbon fiber-reinforced prepreg was cut to fit the shape of the rotor blade. As the prepreg, "TORAYCA" (registered trademark) prepreg P2362W-19 (unidirectional prepreg) and FM6673G-37 (woven fabric prepreg), manufactured by Toray Industries, Inc. were used. As a specific lamination configuration of the component [A], one layer of the above-described unidirectional prepreg (PPg1) was laminated on the inner side of the woven fabric material (PPg2), i.e., on the side where the component [B] is to be configured. Assuming the longitudinal direction of the rotor blade was 0°, the woven fabric material was stacked at ±45° and the unidirectional material was stacked at 0° for use. As for the component [C] and component [D], the PPg1 were stacked for use so that the fibers were oriented in the same direction.

The cut out prepreg was stacked on the porous body 1, and a rotor blade was obtained through the steps (I) to (III). An exemplary lamination configuration is woven fabric prepreg / unidirectional prepreg / porous body / unidirectional prepreg / woven fabric prepreg.

(I) The laminate is placed in a mold cavity (in the form of a rotor blade) for press molding preheated to 180°C, and the mold is closed.

(II) Then, after maintained for 10 minutes, pressure of 3 MPa is applied and maintained for another 2 hours.

(III) While maintaining the pressure, the cavity temperature is cooled to 50°C, and the precursor of the porous body is removed.

(15) Evaluation of positional accuracy of component [D]

The cross-section of the rotor blade was cut out, and observed for positional accuracy of the component [D] using a laser microscope (VK-9510, manufactured by KEYENCE CORPORATION) at a magnification of 50x, and the leading edge and trailing edge in the design drawing were confronted with those of the molded article to measure the positional accuracy.

Specifically, when 20 molded articles were molded, the positional accuracy of the component [D] with respect to the target position, starting from the leading edge, was evaluated as acceptable when the accuracy was within 1/20 of the distance between the leading and trailing edges, and a case where 18 to 20 molded articles were acceptable was evaluated as "S" (Excellent), a case where 14 to 17 molded articles were acceptable was evaluated as "A" (Good), a case where 10 to 13 molded articles were acceptable was evaluated as "B" (Average), a case where less than 10 molded articles were acceptable was evaluated as "C" (Poor).

(16) Rc (mass fraction of resin) of prepreg

Rc of prepreg was determined according to JIS K7071(1988).

(17) Glass transition temperature after molding

Under the same molding conditions as those for a rotor blade, a molded article with a thickness of 2 mm was molded, a test piece having a width of 12.7 mm and a length of 45 mm was cut off, and DMA measurement was performed using a viscoelasticity measuring instrument (ARES, manufactured by TA Instruments), under condition: torsional vibrational frequency, 1.0Hz and rate of temperature rise, 5.0 °C/min within a temperature range from 30 to 250°C. The glass transition temperature (Tg) is defined as a temperature at the intersection of the tangent line in the glass state and the tangent line in the transition state on the storage modulus G' curve.

(Examples 1 to 5)

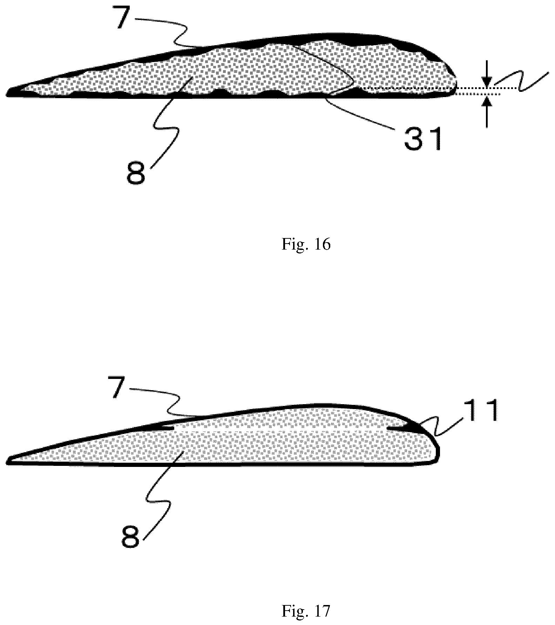

Prepregs used for the component [A], component [C], component [D], and component [D] are listed in Table 1, and porous bodies used for the component [B] are listed in Table 2. Rotor blades with constitutions shown in Table 3 were produced. A typical cross-section of the rotor blade is also shown. In Example 1, a porous body of the core 1 was used, and configured as shown in FIG. 2. In Example 2, a porous body of the core 2 was used, and the porous body is provided with an incision shown in FIG. 4, and configured as shown in FIG. 7 as a rotor blade. In other words, the porous body is provided with the component [C] and component [D]. In Example 3, a porous body of the core 2 was used, the porous body was provided with an incision as shown in FIG. 4, and configured as shown in FIG. 11 as a rotor blade. That is, the porous body was provided with a hollow part, the component [E] was provided in the hollow part. In Example 4, a porous body of the core 4 was used, and configured as shown in FIG. 16 to form a convexo-concave part having a depth indicated by reference sign 32 in the component [B]. In Example 5, a porous body of the core 1 was used, and a rotor blade having a configuration shown in FIG. 17 was molded. In Example 5, the rotor blade can be obtained, skipping a porous body, by integrally molding the component [A] that encloses the component [B] including a plurality of porous precursors. That is, in place of (13) [Porous body ] and (14) [Production step of rotor blade], the component [A] which had been cut and adjusted into a predetermined shape was arranged on a wall surface of a mold, then a precursor of a porous body to be the component [B] was arranged in a mold, and the step (I) or (III) of (13) [Porous body] was performed to obtain a integrally molded product of the component [A] and component [B]. The incision as indicated by the reference sign 11 was formed by adjusting the wall surface of the mold.

(Comparative Examples 1 to 2)

The prepregs used for the component [A] are listed in Table 1. "EFCELL" (registered trademark), a polypropylene sheet with low foaming ratio, manufactured by Furukawa Electric Co., Ltd. was used in place of the component [B]. A typical cross-section of the rotating body is also shown. As for the core 6, an incision similar to that in the core 2 was formed.
A comparison of the core materials of Example 1 and Comparative Example 1 shows that in Example 1, in spite of its equivalent lightweight, the component [B] used for the core has high specific flexural strength and high stiffness as a rotor blade, but also have high adhesive properties and can dramatically improve the fatigue characteristics because the reinforcing fibers of the component [B] penetrate therethrough.
In addition, the comparison of Example 2 and Comparative Example 2 in terms of presence or absence of incisions shows that the positional accuracy of the component [D] is higher in Example 2 using the component [B], and consequently, a rotor blade exhibiting stable fatigue characteristics can be produced. In addition, the presence of the incision provides still higher adhesive properties, resulting in excellent fatigue characteristics over a long period of time.
A comparison of core materials of Example 2 and Comparative Example 3 having an incision formed in the core shows that in the core 6 of Comparative Example 3 which had been prepared with an incision formed in EFCELL, the core was broken, starting from the incision after the step (III), and thus the flexural modulus cannot be measured.
Example 3 shows a molded article of Example 2 further having a hollow part, which can be produced with high positional accuracy of the hollow part.

Industrial Applicability

The rotor blade of the present invention can be suitably applied to air mobilities such as drones and flying cars (unmanned and manned) and wind turbines.

[Table 1]

| | Material used | PPg1 | PPg2 |
|---|---|---|---|
| Component [A], Component [C], Component [D], Component [E] | Product number | P2362W-19 | FM6673G-37 |
| | Matrix resin | Epoxy resin | Epoxy resin |
| | Fiber form | Unidirectional material | Fabric |
| | Rc [%] | 35.5 | 40 |
| | Glass transition temperature after molding [°C] | 204 | 204 |

[Table 2]

| | Core 1 | Core 2 | Core 3 | Core 4 | Core 5 | Core 6 |
|---|---|---|---|---|---|---|
| Material | Component [B] | Component [B] | Component [B] | Component [B] | "EFCELL" | "EFCELL" |
| Reinforcing fiber | CF1 | CF1 | CF1 | CF1 | Absent | Absent |
| Resin | PP | PP | PP | PP | PP | PP |
| Mass mean fiber length (mm) | 6 | 6 | 6 | 6 | - | - |
| Mean void ratio (%) | 66.7 | 66.7 | 66.7 | 66.7 | 66.7 | 66.7 |
| Density of structure body (g/cm$^3$) | 0.36 | 0.36 | 0.36 | 0.36 | 0.33 | 0.33 |
| Depth of incision (mm) | - | 1 | 2 | - | - | 1 |
| Volume fraction of incision in core (%) | - | 5 | 15 | - | - | 5 |
| Depth of convexo-concave part(mm) | - | - | - | 1 | - | - |
| Percentage of convexo-concave part on core surface (%) | - | - | - | 100 | - | - |
| Flexural modulus (Ec) (GPa) | 8.1 | 7.4 | 5.8 | 8 | 0.2 | - |
| Specific flexural stiffness (-) | 5.58 | 5.41 | 4.99 | 5.58 | 1.68 | - |

[Table 3]

| | Example 1 | Example 2 | Example 3 | Example 4 | Example 5 | Comparative Example 1 | Comparative Example 2 | Comparative Example 3 |
|---|---|---|---|---|---|---|---|---|
| Typical cross-section | FIG. 2 | FIGS. 4+7 | FIGS. 4+11 | FIG. 16 | FIG. 17 | FIG. 2 | FIG. 7 | FIGS. 4+7 |
| Configuration and thickness of component [A] | PPg2/PPg1 | PPg2/PPg1 | PPg2/PPg1 | PPg2/PPg1 | PPg2/PPg1 | PPg2/PPg1 | PPg2/PPg1 | PPg2/PPg1 |
| Thickness of component [A] (mm) | 0.41 | 0.41 | 0.41 | 0.41 | 0.41 | 0.41 | 0.41 | 0.41 |
| Penetration length of reinforcing fiber in component [B] into component [A] ($\mu$m) | 15 | 15 | 15 | 15 | 15 | - | - | - |
| Core | Core 1 | Core 2 | Core 2 | Core 4 | Core 1 | Core 1 | Core 5 | Core 6 |
| Mean void ratio of component [B] (%) | 66.7 | 66.7 | 66.7 | 66.7 | 66.7 | 66.7 | 66.7 | 66.7 |
| Maximum void ratio upon trifurcation of component [B] (%) | 69 | 69 | 69 | 69 | 69 | 66.7 | 66.7 | 66.7 |
| Minimum void ratio upon trifurcation of component [B] (%) | 64 | 64 | 64 | 64 | 64 | 66.7 | 66.7 | 66.7 |
| Configuration of component [C] | - | PPg1 2 layers | PPg1 2 layers | - | - | - | PPg1 2 layers | PPg1 2 layers |
| Thickness of component [C] (mm) | - | 0.4 | 0.4 | - | - | - | 0.4 | 0.4 |
| Arrangement percentage of component [C] based on longitudinal direction (%) | - | 80 | 80 | - | - | - | 80 | 80 |
| Penetration length of reinforcing fiber in component [B] into component [C] ($\mu$m) | - | 11 | 11 | - | - | - | - | - |
| Incision or convexo-concave part | - | Incision | Incision | Convexo-concave | Incision | - | - | Incision |
| Arrangement percentage of incision or convexo-convex part based on longitudinal direction (%) | - | 80 | 80 | 100 | 80 | - | - | 80 |
| Depth of incision or convexo-concave part (mm) | - | 1 | 1 | 0.1 | 1 | - | - | 1 |
| Configuration of component [D] | - | PPg1 2 layers | PPg1 2 layers | PPg1 2 layers | PPg1 2 layers | - | PPg1 2 layers | PPg1 2 layers |
| Thickness of component [D] (mm) | - | 0.4 | 0.4 | 0.4 | 0.4 | - | 0.4 | 0.4 |
| Arrangement percentage of component [D] based on longitudinal direction (%) | - | 100 | 100 | 100 | 100 | - | 100 | 100 |

(continued)

| | Example 1 | Example 2 | Example 3 | Example 4 | Example 5 | Comparative Example 1 | Comparative Example 2 | Comparative Example 3 |
|---|---|---|---|---|---|---|---|---|
| Curvature R (mm) | - | 3 | 3 | 3 | 3 | - | 3 | 3 |
| Penetration length of reinforcing fiber in component [B] into component [D] ($\mu$m) | - | 11 | 11 | 11 | 11 | - | 11 | 11 |
| Positional accuracy of component [D] | - | S | S | S | A | - | B | B |
| Shape of hollow part | - | - | Triangle | Triangle | - | - | - | - |
| Diameter of hollow part (mm) | - | - | 3 mm | 3 mm | - | - | - | - |
| Presence or absence of component [E] | - | - | PPg1 1 layer | PPg1 1 layer | - | - | - | - |
| Thickness of component [E] (mm) | - | - | 0.2 | 0.2 | - | - | - | - |

Reference Signs List

1   Exemplary rotor blade
2   Central axis at the time or rotation of rotor blade
3   Distance between central axis and tip of rotor blade
4   Center of distance between central axis and tip of rotation axis
5   Longitudinal direction of rotor blade
6   Exemplary cross-section of rotor blade
7   Skin constituting surface of rotor blade
8   Core constituting interior of rotor blade
9   Reinforcing part
10  Step part
11  Incision
12  Incision length
13  Leading edge
14  Trailing edge
15  Example of incision in longitudinal direction
16  Straight line connecting leading edge and trailing edge
17  Section passing through the center of and orthogonal to straight line connecting leading edge and trailing edge
18  Continuous part (beam part)
19  Bonding part
20  Carvature of bonding part
21  Hollow part
22  Inner reinforcing layer
23  Example of shape of hollow part
24  Matrix resin in component [A]
25  Void in component [B]
26  Reinforcing fiber in component [B]
27  Resin of component [B]
28  Reinforcing fiber in component [B] penetrating matrix resin in component [A]
29  Penetration length of reinforcing fiber in component [B]
30  Single fiber
31  Convexo-concave part
32  Distance between convexo-concave parts
33  Macroscopic boundary between component [A] and component [B]
34  Dividing lines for dividing porous body into three equal volumes

**Claims**

1.  A rotor blade comprising at least:

    a component [A] described below constituting a skin which is a surface layer of the rotor blade; and
    a component [B] described below constituting a core which is an interior of the skin,
    wherein the component [B] is enclosed in the component [A] at least in a cross-section taken at the center between a central axis at the time of rotation and a tip of the rotor blade:

        Component [A]: a continuous fiber base material including continuous reinforcing fibers and a matrix resin;
        Component [B]: a porous body including reinforcing fibers and a resin, the reinforcing fibers having a mass mean fiber length of 1 mm or more and 15 mm or less.

2.  The rotor blade according to claim 1, wherein at least in the cross-section taken at the center between the central axis at the time of rotation and the tip of the rotor blade, a component [C] described below is placed as a reinforcing layer having a thickness different from that of the component [A], the reinforcing layer is placed over at least 50% or more in the longitudinal direction with respect to a zone from the central axis to the tip of the rotor blade, and the component [B] is anchored along a step part having a different thickness:
    Component [C]: a continuous fiber base material including continuous reinforcing fibers and a matrix resin.

3. The rotor blade according to claim 1 or 2, wherein at least in the cross-section taken at the center between the central axis at the time of rotation and the tip of the rotor blade, when an outer layer, excluding 5 mm each from a leading edge and a trailing edge, is uniformly chipped in a range of 0.05 to 10 mm from the outermost part forming the blade, the component [B] has an incision of 0.1 mm or more existing over at least 50% or more in the longitudinal direction of the rotor blade, and the incision has the component [A] getting therein.

4. The rotor blade according to claim 1 or 2, wherein at least in the cross-section taken at the center between the central axis at the time of rotation and the tip of the rotor blade, when an outer layer, excluding 5 mm each from a leading edge and a trailing edge, is uniformly chipped in a range of 0.05 to 10 mm from the outermost part forming the blade, the component [B] has convexo-concave parts having depths or heights of 0.05 mm or more over at least 50% or more in the longitudinal direction of the rotor blade, and the convexo-concave parts have the component [A] getting therein.

5. The rotor blade according to any one of claims 1 to 4, wherein at least in the cross-section taken at the center between the central axis at the time of rotation and the tip of the rotor blade, a mean void ratio of the porous portion of the component [B] is in a range of 10 vol% or more and 97 vol% or less, and as for mean void ratios of the porous portions in the three portions having the same volume, divided at least by planes orthogonal to a straight line connecting a leading edge and a trailing edge, the maximum mean void ratio differs from the minimum mean void ratio by 3 vol% or more.

6. The rotor blade according to any one of claims 1 to 5, further comprising a component [D] constituting a continuous part connecting the component [A], at least in the cross-section taken at the center between the central axis at the time of rotation and the tip of the rotor blade:
Component [D]: a continuous fiber base material including continuous reinforcing fibers and a matrix resin.

7. The rotor blade according to claim 6, wherein in the component [D], a bonding part with the component [A] constituting the skin of the rotor blade has a continuously varying thickness, a curvature R at which the thickness varies is formed with a radius of 1 to 100 mm, and the component [B] is anchored along a shape formed with the curvature R.

8. The rotor blade according to any one of claims 1 to 7, comprising at least a hollow part of more than 1 mm, at least in the cross-section taken at the center between the central axis at the time of rotation and the tip of the rotor blade.

9. The rotor blade according to claim 8, wherein an internal reinforcing layer of the component [E] is further placed in the hollow part:
Component [E]: a continuous fiber base material including continuous reinforcing fibers and a matrix resin.

10. The rotor blade according to any one of claims 1 to 9, wherein the reinforcing fibers constituting the component [B] are approximately monofilamentous, and are randomly dispersed in the porous body.

11. The rotor blade according to any one of claims 1 to 10, wherein a specific flexural stiffness expressed as $Ec^{1/3} \cdot \rho^{-1}$ is within a range of 3 or more and 20 or less, where Ec indicates a flexural modulus of the component [B] and $\rho$ indicates a density of the component [B].

12. The rotor blade according to any one of claims 1 to 11, wherein some of the reinforcing fibers constituting the component [B] penetrate a part of the component [A], and the maximum penetration length is 5 $\mu$m or more.

13. An air mobility using the rotor blade according to any one of claims 1 to 12.

Fig. 1

Fig. 2

Fig. 3

Fig. 4

Fig. 5

(a)

17

7

16

8

(b)

2

34

Fig. 6

7

18

8

19

Fig. 7

Fig. 8

Fig. 9

Fig. 10

Fig. 11

Fig. 12

Fig. 13

(a)

A

30

(b)

30b

30c

Fig. 14

(a)

7

8

(b)

7

31

8

(c)

7

31

8

Fig. 15

Fig. 16

Fig. 17

## INTERNATIONAL SEARCH REPORT

International application No.

**PCT/JP2023/002834**

### A.    CLASSIFICATION OF SUBJECT MATTER

***B64C 1/00***(2006.01)i; ***B29C 70/06***(2006.01)i; ***B29C 70/42***(2006.01)i; ***B29C 70/68***(2006.01)i; ***B64C 11/22***(2006.01)i; ***F03D 1/06***(2006.01)i

FI:    B64C1/00 B; B29C70/06; B29C70/42; B29C70/68; B64C11/22; F03D1/06 A

According to International Patent Classification (IPC) or to both national classification and IPC

### B.    FIELDS SEARCHED

Minimum documentation searched (classification system followed by classification symbols)

B64C1/00; B29C70/06; B29C70/42; B29C70/68; B64C11/22; F03D1/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| Y | JP 4561344 B2 (TORAY IND INC) 13 October 2010 (2010-10-13)<br>claims, paragraphs [0023]-[0025], [0027], fig. 1-6 | 1-13 |
| Y | JP 2019-59048 A (MITSUBISHI HEAVY IND LTD) 18 April 2019 (2019-04-18)<br>paragraph [0065], fig. 1-11 | 1-13 |
| Y | JP 2002-213387 A (MATSUSHITA ELECTRIC IND CO LTD) 31 July 2002 (2002-07-31)<br>paragraphs [0023], [0024], [0044], fig. 1-8 | 1-13 |
| Y | JP 2017-61600 A (SEKISUI PLASTICS) 30 March 2017 (2017-03-30)<br>paragraphs [0026], [0034], [0036], fig. 1-3 | 1-13 |
| Y | WO 89/09336 A1 (STABLES, Patrick, Antony) 05 October 1989 (1989-10-05)<br>fig. 1-18 | 2-4, 6-9, 12 |
| Y | WO 2015/029634 A1 (TORAY IND INC) 05 March 2015 (2015-03-05)<br>paragraph [0058], fig. 1-6 | 12 |

☐ Further documents are listed in the continuation of Box C.    ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **02 March 2023** | **20 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/002834**

| Patent document cited in search report | | | Publication date (day/month/year) | Patent family member(s) | Publication date (day/month/year) |
|---|---|---|---|---|---|
| JP | 4561344 | B2 | 13 October 2010 | (Family: none) | |
| JP | 2019-59048 | A | 18 April 2019 | US 2021/0078217 A1 paragraph [0075], fig. 1-11 WO 2019/059260 A1 CN 110678306 A | |
| JP | 2002-213387 | A | 31 July 2002 | (Family: none) | |
| JP | 2017-61600 | A | 30 March 2017 | (Family: none) | |
| WO | 89/09336 | A1 | 05 October 1989 | GB 2216606 A fig. 1-18 | |
| WO | 2015/029634 | A1 | 05 March 2015 | US 2016/0214346 A1 paragraph [0073], fig. 1-6 EP 3040195 A1 CN 105492200 A KR 10-2016-0051727 A | |

Form PCT/ISA/210 (patent family annex) (January 2015)

**REFERENCES CITED IN THE DESCRIPTION**

**Patent documents cited in the description**

- JP 2022009927 A
- JP 2019001024 A